# EUROPÄISCHE PATENTSCHRIFT

(11) **EP 2 383 150 B1**
(45) Veröffentlichungstag und Bekanntmachung des Hinweises auf die Patenterteilung: **26.06.2013**
(21) Anmeldenummer: 11466008.7
(22) Anmeldetag: 18.04.2011
(51) Int. Cl.: B60R 7/10

(54) **Befestigungsmittel im Fahrzeugkofferraum**
Means of fixing in the luggage area of a vehicle
Moyen de fixation dans le coffre d'un véhicule

(30) Priorität: 29.04.2010 CZ 20100323
(43) Veröffentlichungstag der Anmeldung: 02.11.2011
(73) Patentinhaber: Skoda Auto A.S., 293 60 Mladá Boleslav (CZ)
(72) Erfinder: Polácek, Roman, 50009 Hradec Králové (CZ)

(56) Entgegenhaltungen:
- DE-A1- 4 333 479
- US-A1- 2009 256 372

## Beschreibung

### Technisches Gebiet

Die Erfindung betrifft ein Befestigungsmittel, das in der Seitenverkleidung des Fahrzeugkofferraumes an der Stelle der in der Verkleidung ausgestalteten Aussparung für die Anordnung einer Verbindungsschraube für die Anbindung der Verkleidung an die Fahrzeugkarosserie angeordnet ist, wobei das Befestigungsmittel zur Befestigung der zu transportierenden Gegenstände, Gepäckstücke, Taschen, Befestigungselemente für verschiedene Gepäcknetzprogramme oder ähnliche Kofferraumsysteme für die Befestigung der zu transportierenden Gegenstände dient.

### Bisheriger Stand der Technik

Üblicherweise werden für die Befestigung von kleinen Gepäckstücke sowie Einkaufstaschen im Kofferraum verschiedene Aufhängesysteme und Haken verwendet, die im Kofferraum entweder zur Seitenverkleidung oder direkt an die Karosserie fest und nicht zerlegbar befestigt sind.

Aus der US 2009/0256372 ist ein Verkleidungssystem zum verbergen ein Strukturelement eines Kraftfahrzeugs bekannt. Dieses Verkleidungssystem umfasst eine Verkleidung, die über dem Strukturelement angebracht und mit diesem durch Befestigungsmitteln befestigt ist, und die mit einer dem Strukturelement zugewandten inneren Oberfläche und einer äusseren Oberfläche versehen ist. Das Verkleidungssystem umfasst noch eine Zugangsplatte, die einen von der äußeren Oberfläche der Verkleidung hervorstehenden Hakenabschnitt umfasst und in seiner Befestigungsposition eine Öffnung der Verkleidung erfüllt und die Befestigungsmitteln abdeckt.

Aus dem Dokument DE4333479A1ist jedoch auch eine Lösung der Befestigung einer demontierbaren Aufhängevorrichtung bekannt. Es handelt sich um eine Lösung der Befestigung einer Aufhängevorrichtung, insbesondere dann eines Hakens, direkt an die Innenwand der Fahrzeugkarosserie, wobei die Aufhängevorrichtung mit ihrer Basisfläche zur Karosseriewand anliegt. Die Darstellung dieser Lösung liegt darin, dass auf der Basisfläche der Aufhängevorrichtung ein die Wandöffnung durchsetzender Steg ausgebildet ist, wobei dieser Steg der Halteeinrichtung als Klipp ausgestaltet ist, der einen oberen und unteren Schenkel aufweist, deren freie Enden sich elastisch am oberen und unteren Rand der Öffnung in der Karosseriewand abstützen. Die Halteeinrichtung ist ein im Querschnitt U-förmiges Gebilde und im Bereich des Bodenteils einstückig mit dem Steg verbunden. Der Steg der Halteeinrichtung ist asymmetrisch angeordnet, so dass der obere Schenkel länger ist als der untere. Die Aufhängevorrichtung mit einem Vorsprung in der Basisfläche stützt sich gegen den unteren Rand der Öffnung ab. Diese Abstützung ist auf relativ kleiner Fläche ausgebildet und deshalb kann bei größerer Belastung der Aufhängevorrichtung das elastische Ende des Schenkels beschädigt und nachfolgend die Aufhängevorrichtung losgelöst werden. Einen weiteren Nachteil stellt die komplizierte Montage oder Demontage der Aufhängevorrichtung aus der Öffnung in der Karosseriewand dar. Bei Montage bzw. Demontage werden die elastischen Enden der Schenkel mehr belastet und können eine Beschädigung, eventuell auch Abbruch dieser elastischen Enden verursachen.

### Darstellung der Erfindung

Die Aufgabe wird durch ein Befestigungsmittel im Fahrzeugkofferraum gelöst, das in der seitlichen Kofferraumverkleidung des Fahrzeuges in der Aussparung für die Anordnung einer Verbindungsschraube für die Anbindung der Verkleidung an die Fahrzeugkarosserie angeordnet ist. Das Befestigungsmittel wird durch einen Haken und einen in die Aussparung der Seitenverkleidung eingreifenden Körper gebildet, der eine obere, hintere und untere Wand aufweist. Die Darstellung der Erfindung liegt darin, dass die hintere Wand der Aussparung einen Einschnitt und eine Abstützfläche aufweist und dass in dem hinteren Endbereich des Körpers des Befestigungsmittels ein elastischer Schenkel ausgebildet ist, dessen oberes Ende in den Einschnitt der hinteren Wand der Aussparung eingreift. Auf dem äußeren Ende der unteren Wand der Aussparung ist eine Formkante ausgestaltet, die einen Einschnitt aufweist. Der Körper des Befestigungsmittels weist einen Formschluss auf, der so ausgestaltet ist, damit dieser genau in den Einschnitt der Formkante der Aussparung eingreift. Die Länge der unteren Wand, d.h. die Tiefe der Aussparung ist größer als die Länge des Unterteils des Körpers des Befestigungsmittels. Hiermit wird die Verschiebung des Befestigungsmittels in der unteren Wand der Aussparung ermöglicht. Der Längenabstand zwischen dieser Tiefe der Aussparung und der Länge des Befestigungsmittels ist größer als die Tiefe des Einschnitts der Formkante der Aussparung. Dadurch wird das Ausrücken des Formschlusses des Befestigungsmittels aus dem Einschnitt der Formkante der Aussparung ermöglicht.

Im Stand der Technik der unter DE4333479A1 angeführten Lösung ist die eigentliche Befestigung der Aufhängevorrichtung, d.h. des Hakens, direkt an der Innenwand der Fahrzeugkarosserie ausgeführt. Wohingegen das Befestigungsmittel nach der vorliegenden erfindungsgemäßen Lösung an der Kofferraumverkleidung des Fahrzeuges befestigt ist.

Der Vorteil solcher Lösung liegt darin, dass das Befestigungsmittel anstelle eines Blindstopfen genutzt wird, der standardmäßig für die Abdeckung der Aussparung verwendet wird, in der die Verbindungsschraube für die Anbindung der Verkleidung an die Fahrzeugkarosserie angeordnet ist.

### Übersicht der Figuren der Zeichnungen

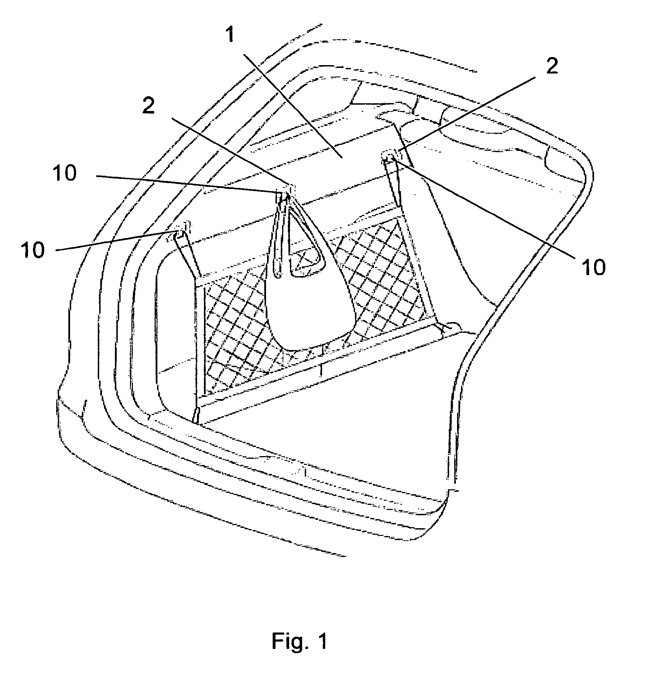

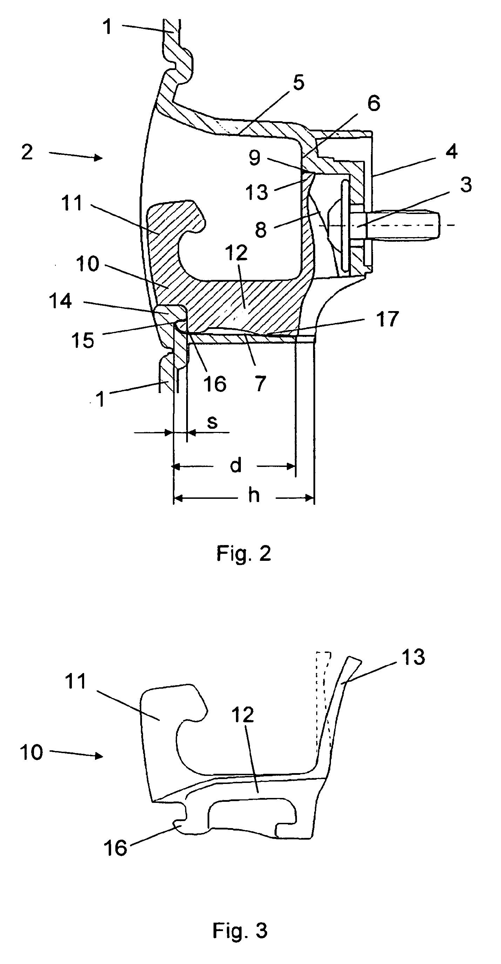

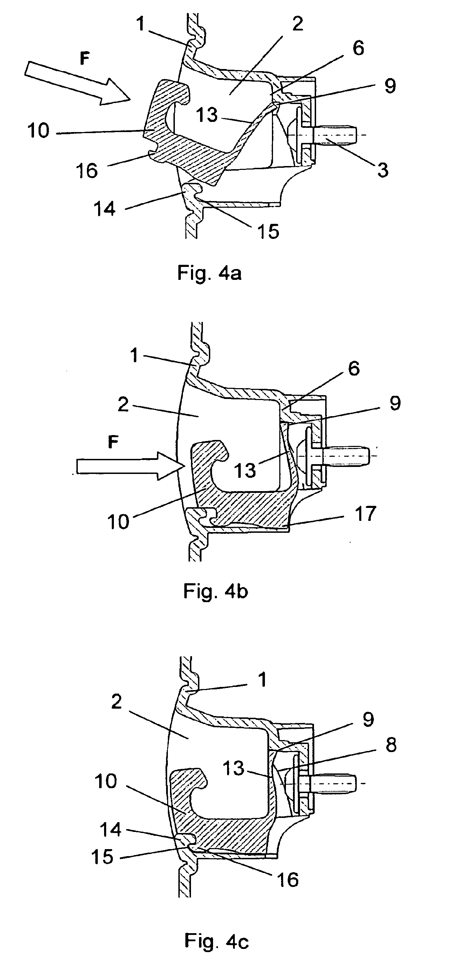

In Fig. 1 ist die Anordnung und verschiedene praktische Anwendungsmöglichkeiten der erfindungsgemäßen Befestigungsmittel in perspektivischer Gesamtansicht der Seitenwand des Fahrzeugkofferraumes, in Fig. 2 in einem Querschnitt das in der Aussparung der Kofferraumverkleidung angeordnete Befestigungsmittel, in Fig. 3 in einer Seitenansicht das eigentliche Befestigungsmittel und in Fig. 4a bis 4c in einem Querschnitt der Ablauf der Montage des Befestigungsmittels in die Aussparung der Kofferraumverkleidung dargestellt.

### Ausführungsbeispiel der Erfindung

In der Fig. 1 ist der Fahrzeugkofferraum dargestellt, in dessen Seitenverkleidung 1 die Aussparungen 2 für die Anordnung der Verbindungsschrauben 3 ausgestaltet sind. Diese Verbindungsschrauben 3 dienen zur Befestigung der Verkleidung 1 zur Fahrzeugkarosserie 4. Damit aus dem Fahrzeuginnenraum die Öffnung der Aussparung 2 nicht sichtbar wird, was aus Designsicht unpassend ist, werden für die Abdeckung der Aussparung 2 standardmäßig Blindstopfen eingesetzt. Anstelle dieses Blindstopfens, der keine weitere Funktion erfüllt, wird hier erfindungsgemäß das Befestigungsmittel 10 verwendet und in die Öffnung der Aussparung eingesetzt.

Das Befestigungsmittel 10, gemäß Fig. 2 und 3, wird durch einen Haken 11 gebildet, der funktionsgemäß in den Gepäckraum orientiert ist und teilweise die Funktion des Blindstopfens ersetzt. Das Befestigungsmittel 10 wird weiter durch einen Körper 12, der in die Aussparung 2 der Seitenverkleidung 1 einpasst, gebildet, wobei die Aussparung 2 eine obere 5, hintere 6 und untere Wand 7 aufweist. In der hinteren Wand 6 der Aussparung 2 sind ein Einschnitt 9 und eine Abstützfläche 8 ausgebildet. Im hinteren Endbereich des Körpers 12 des Befestigungsmittels 10 befindet sich ein elastischer Schenkel 13, dessen oberes Ende genau in den Einschnitt 9 der Aussparung 2 eingreift. Der Schenkel 13 des Befestigungsmittels 2 ist aus einem elastischen Material mit notwendiger Vorspannung ausgebildet, damit die notwendige Verschwenkung seines oberen Ende (Fig. 3) sichergestellt wird.

Am äußeren Ende der unteren Wand 7 der Aussparung 2, an der in den Kofferraum herausragenden Stelle ist eine Formkante 14 mit dem Einschnitt 15 ausgebildet, der die notwendige Tiefe s aufweist. Der Körper 12 des Befestigungsmittels 2 umfasst einen Formschluss 16, der genau in den Einschnitt 15 der Formkante 14 der Aussparung 2 fallt.

Die Länge der unteren Wand 7, d.h. die Tiefe h der Aussparung 2, gemäß Fig. 2, ist größer als die Länge d des Unterteils 17 des Körpers 12 des Befestigungsmittels 10. Dadurch wird die Verschiebung des Befestigungsmittels 10 in der unteren Wand 7 der Aussparung 2 in dem Umfang ermöglicht, der sich aus der Differenz dieser Längen ergibt. Diese Bewegung des Befestigungsmittels 10 in der Aussparung 2 verläuft quer gegenüber der Karosserie 4, d.h. rechtwinklig zur Verkleidung 1 des Fahrzeugkofferraumes. In der Grundfunktionsstellung wird infolge des elastischen Schenkels 13 der Formschluss 16 in den Einschnitt 15 der Formkante 14 der Aussparung 2 eingreifen.

Der Längenunterschied, gemäß Fig. 2, zwischen der Tiefe h der unteren Wand 7 der Aussparung 2 und der Länge d des unterer Teils 17 des Körpers 12 des Befestigungsmittels 10 ist größer als die Tiefe s des Einschnittes 15 der Formkante 14 der Aussparung 2. Damit wird das Herausziehen des Formschlusses 16 des Befestigungsmittels 10 aus dem Einschnitt 15 der Formkante 14 der Aussparung 2 ermöglicht.

Die Zusammenwirkung des Einschnitts 9 der Aussparung 2 mit dem elastischen Schenkel 13 des hinteren Bereichs des Körpers 12 des Befestigungsmittels 10 erlaubt eine genaue Positionierung des ganzen Befestigungsmittels 10 i.e. Haken 11 und der Körper 12 in der Aussparung 2. Damit werden der Haken 11 und die Verkleidung 1 des Fahrzeugkofferraumes während der Ladung von Guten nicht beschädigt.

Die Handhabung des Befestigungsmittels 10 ist den Fig. 4a bis 4c zu entnehmen.

In die Aussparung 2 wird mit der Hand in der Pfeilrichtung F, gemäß Fig. 4a, das Befestigungsmittel 10 so eingelegt, damit das obere Ende des elastischen Schenkels 13 in den Einschnitt 9 der Aussparung 2 eingreift. Nachfolgend wird mit den Fingern auf das Befestigungsmittel 10 in der Pfeilrichtung, gemäß Fig. 4b, so gedrückt, damit der Formschluss 16 des Befestigungsmittels 10 die Formkante 14 der Aussparung 2 überwindet. Gleichzeitig stützt sich der elastische Schenkel 13 an der Abstützfläche 8 der hinteren Wand 6 der Aussparung 2 unterstützend ab. Dann wird mit einer vertikalen Bewegung das Befestigungsmittel 10 zur unteren Wand 7 der Aussparung 2 angedrückt. Durch nachfolgendes Nachlassen des Fingerdrucks wird infolge der Vorspannung des Schenkels 13, die gegen die Druckkraft der Finger wirkt, der Formschluss 16 in den Einschnitt 15 der Formkante 14 der Aussparung 2 einrasten. Durch das Einrasten des Formschlusses 16 in den Einschnitt 15 der Aussparung 2, wo er durch die Vorspannung des Schenkels 13 fixiert ist, und durch die Einfassung des oberen Endes des elastischen Schenkels 13 im Einschnitt 9 der Aussparung 2, gemäß Fig. 4c, ist das Befestigungsmittel 10 gegen spontanes Herausfallen aus der Einfassung in der Aussparung 2 gesichert.

Nachfolgender Ablauf der Demontage ist identisch, jedoch in umgekehrter Abfolge. Zuerst wird das Befestigungsmittel 10 mit der Kraft F in der Pfeilrichtung gemäß Fig. 4b eingedruckt. Dadurch wird der Formschluss 16 aus dem Einschnitt 15 der Aussparung 2 herausgeschoben. Dann wird mit einer Bewegung nach oben und nachfolgender Verschwenkung des Befestigungsmittels 10 in der Aussparung 2 dieses aus der Einpassung in der Aussparung 2 herausgeschoben.

Das Befestigungsmittel 10 kann jederzeit vom Nutzer nach dem oben genannten Ablauf demontiert und anstelle dieses ein Blindstopfen eingebaut werden, der standardmäßig zur Abdeckung der Aussparung 2 in der Verkleidung 1 genutzt wird.

Die oben genannte Lösung des Befestigungsmittels kann nicht nur in der Verkleidung des Gepäckraumes, sondern beliebig und in beliebiger Anzahl im Fahrzeuginnenraum für die Fahrgäste genutzt werden.

Das Befestigungsmittel kann bei Erfüllung der oben genannten Bedingungen aus Kunststoff, Metall oder Holz eventuell aus einer Kombination dieser Materialien bestehen.

### Gewerbliche Anwendbarkeit

Das erfindungsgemäße Befestigungsmittel im Fahrzeugkofferraum kann in allen Fahrzeugen genutzt und vorteilhaft z.B. an der Seitenwand des Fahrzeugkofferraumes angeordnet werden.

### Verwendete Bezeichnungen

| | |
|---|---|
| 1 | Verkleidung des Fahrzeugkofferraumes |
| 2 | Aussparung in der Verkleidung für die Anordnung der Verbindungsschraube |
| 3 | Verbindungsschraube |
| 4 | Fahrzeugkarosserie |
| 5 | obere Wand der Aussparung |
| 6 | hintere Wand der Aussparung |
| 7 | untere Wand der Aussparung |
| 8 | Abstützfläche der hinteren Wand der Aussparung |
| 9 | Einschnitt in der hinteren Wand der Aussparung |
| 10 | Befestigungsmittel |
| 11 | Haken des Befestigungsmittels |
| 12 | Körper des Befestigungsmittels |
| 13 | elastischer Schenkel des Befestigungsmittels |
| 14 | Formkante der unteren Wand der Aussparung |
| 15 | Einschnitt der Formkante |
| 16 | Formschluss des Befestigungsmittels |
| 17 | Unterteil des Körpers |
| d | Länge des Unterteils des Körpers |
| h | Tiefe der unteren Wand der Aussparung |
| s | Tiefe des Einschnittes der Formkante |

## Patentansprüche

1. Befestigungsmittel (10) im Fahrzeugkofferraum, das in der Seitenverkleidung (1) des Fahrzeugkofferraumes in einer Aussparung (2) angeordnet ist, die in der Seitenverkleidung (1) des Fahrzeugkofferraumes für die Anordnung der Verbindungsschraube (3), der Anbindung der Verkleidung (1) an die Fahrzeugkarosserie (4) stellt sicher, ausgebildet ist; und besteht aus dem Haken (11) und dem Körper (12), der in die Aussparung (2) der Seitenverkleidung (1) eingreift, wobei die Aussparung (2) eine obere (5), hintere (6) und untere Wand (7) aufweist, **dadurch gekennzeichnet, dass** in der hinteren Wand (6) der Aussparung (2) ein Einschnitt (9) und eine Abstützfläche (8) ausgebildet sind, wobei im hinteren Endbereich des Körpers (12) des Befestigungsmittels (10) ein elastischer Schenkel (13) sich befinder, der für genaues Eingreifen seines oberen Ende in den Einschnitt (9) der Aussparung (2) ausgebildet ist

2. Befestigungsmittel (10) nach dem Anspruch 1 **dadurch gekennzeichnet, dass** am äußeren Ende der unteren Wand (7) der Aussparung (2) die Formkante (14) mit dem Einschnitt (15) ausgebildet ist, wobei der Körper (12) des Befestigungsmittels (10) den Formschluss (16) aufweist, der für das genaue Eingreifen in den Einschnitt (15) der Formkante (14) der Aussparung (2) ausgestaltet ist.

3. Befestigungsmittel (10) nach den vorgenannten Ansprüchen, **dadurch gekennzeichnet, dass** die Tiefe (h) der unteren Wand (7) der Aussparung (2) größer als die Länge (d) des unteren Teils (17) des Körpers (12) des Befestigungsmittels (10) ist, wodurch die Verschiebung des Befestigungsmittels (10) in der Aussparung (2) ermöglicht wird.

4. Befestigungsmittel (10) nach den vorgenannten Ansprüchen **dadurch gekennzeichnet, dass** der Unterschied zwischen der Tiefe (h) der unteren Wand (7) der Aussparung (2) und der Länge (d) des unteren Teils (17) des Körpers (12) des Befestigungsmittels (10) größer als die Tiefe (s) des Einschnittes (15) der Formkante (14) der Aussparung (2) ist, wodurch das Herausziehen des Formschlusses (16) des Befestigungsmittels (10) aus dem Einschnitt (15) der Formkante (14) der Aussparung (2) ermöglicht wird.

## Claims

1. A fastening means (10) in the vehicle luggage compartment, which means is arranged in the side lining (1) of the vehicle luggage compartment in a recess (2) which is formed in the side lining (1) of the vehicle luggage compartment for the arrangement of the connecting screw (3) which ensures that the lining (1) is attached to the vehicle body (4); and consists of the hook (7) and the body (12) which engages in the recess (2) of the side lining (1), wherein the recess (2) has an upper (5), rear (6) and lower wall (7), **characterized in that** an incision (9) and a supporting surface (8) are formed in the rear wall (6) of the recess (2), wherein an elastic leg (13) is situated in the rear end region of the body (12) of the fastening means (10) and is designed for exact engagement of its upper end in the incision (9) of the recess (2).

2. Fastening means (10) according to Claim 1, **characterized in that** the shaped edge (14) with the incision (15) is formed at the outer end of the lower wall (7) of the recess (2), wherein the body (12) of the fastening means (10) has the form-fitting element (16) which is designed for exact engagement in the incision (15) of the shaped edge (14) of the recess (2).

3. Fastening means (10) according to the preceding claims, **characterized in that** the depth (h) of the lower wall (7) of the recess (2) is greater than the length (d) of the lower part (17) of the body (12) of the fastening means (10), thereby allowing the displacement of the fastening means (10) in the recess (2).

4. Fastening means (10) according to the preceding claims, **characterized in that** the difference between the depth (h) of the lower wall (7) of the recess (2) and the length (d) of the lower part (17) of the body (12) of the fastening means (10) is greater than the depth (s) of the incision (15) of the shaped edge (14) of the recess (2), thereby allowing the form-fitting element (16) of the fastening means (10) to be extracted from the incision (15) of the shaped edge (14) of the recess (2).

## Revendications

1. Moyen de fixation (10) dans le coffre d'un véhicule, qui est disposé dans l'habillage latéral (1) du coffre de véhicule dans un évidement (2) qui est réalisé dans l'habillage latéral (1) du coffre de véhicule pour disposer la vis de connexion (3) qui garantit la connexion de l'habillage (1) à la carrosserie du véhicule (4) ; et qui se compose du crochet (11) et du corps (12) qui vient en prise dans l'évidement (2) de l'habillage latéral (1), l'évidement (2) présentant une paroi supérieure (5), arrière (6) et inférieure (7), **caractérisé en ce que** dans la paroi arrière (6) de l'évidement (2) sont réalisées une entaille (9) et une surface de support (8), dans la région d'extrémité arrière du corps (12) du moyen de fixation (10) se trouvant une branche élastique (13) qui est réalisée de manière à s'engager précisément avec son extrémité supérieure dans l'entaille (9) de l'évidement (2).

2. Moyen de fixation (10) selon la revendication 1, **caractérisé en ce qu'**à l'extrémité extérieure de la paroi inférieure (7) de l'évidement (2) est réalisée l'arête de moulage (14) avec l'entaille (15), le corps (12) du moyen de fixation (10) présentant la connexion par engagement par coopération de forme (16) qui est configurée de manière à s'engager précisément dans l'entaille (15) de l'arête de moulage (14) de l'évidement (2).

3. Moyen de fixation (10) selon l'une quelconque des revendications précédentes, **caractérisé en ce que** la profondeur (h) de la paroi inférieure (7) de l'évidement (2) est supérieure à la longueur (d) de la partie inférieure (17) du corps (12) du moyen de fixation (10), de sorte que le déplacement du moyen de fixation (10) dans l'évidement (2) soit possible.

4. Moyen de fixation (10) selon l'une quelconque des revendications précédentes, **caractérisé en ce que** la différence entre la profondeur (h) de la paroi inférieure (7) de l'évidement (2) et la longueur (d) de la partie inférieure (17) du corps (12) du moyen de fixation (10) est supérieure à la profondeur (s) de l'entaille (15) de l'arête de moulage (14) de l'évidement (2), de sorte que le retrait de la connexion par engagement par coopération de forme (16) du moyen de fixation (10) hors de l'entaille (15) de l'arête de moulage (14) de l'évidement (2) soit possible.
